# EUROPÄISCHE PATENTSCHRIFT

(11) **EP 3 647 714 B1**
(45) Veröffentlichungstag und Bekanntmachung des Hinweises auf die Patenterteilung: **27.01.2021**
(21) Anmeldenummer: 18203963.6
(22) Anmeldetag: 01.11.2018
(51) Int. Cl.: G01B 7/02, B64G 1/64

(54) **SENSOREINRICHTUNG, EINFANGEINRICHTUNG, BESTIMMUNGSVERFAHREN UND EINFANGVERFAHREN ZUM BESTIMMEN EINER RELATIVEN POSITION BZW. EINFANGEN EINES OBJEKTES IM WELTRAUM**
SENSOR DEVICE, CAPTURE DEVICE, DETERMINATION METHOD AND CAPTURE METHOD FOR DETERMINING A RELATIVE POSITION OR CAPTURING AN OBJECT IN SPACE
DISPOSITIF CAPTEUR, DISPOSITIF DE CAPTAGE, PROCÉDÉ DE DÉTERMINATION ET PROCÉDÉ DE CAPTAGE PERMETTANT DE DÉTERMINER UNE POSITION RELATIVE OU DE CAPTER UN OBJET DANS L'ESPACE

(43) Veröffentlichungstag der Anmeldung: 06.05.2020
(73) Patentinhaber: Airbus Defence and Space GmbH, 82024 Taufkirchen (DE)
(72) Erfinder: Mädiger, Dr. Bernd, 28199 Bremen (DE); Lübke, Verena, 28199 Bremen (DE); Gries, Florian, 28199 Bremen (DE)
(74) Vertreter: Marschall, Stefan

(56) Entgegenhaltungen:
- US-A- 5 003 260
- US-A1- 2003 169 035
- US-A1- 2015 314 893
- US-A1- 2018 292 235

## Beschreibung

Die vorliegende Erfindung betrifft eine Sensoreinrichtung und ein Bestimmungsverfahren jeweils zum Bestimmen einer relativen Position eines Objekts im Weltraum relativ zur (d.h. in Bezug auf die) Sensoreinrichtung. Darüber hinaus betrifft die Erfindung eine Einfangvorrichtung und ein Einfangverfahren jeweils zum Einfangen eines Objektes im Weltraum.

Das Einfangen von Objekten wie insbesondere Satelliten oder Weltraumschrott im Weltraum bedeutet ein Ergreifen und Festhalten des jeweiligen Objekts durch eine entsprechende Einrichtung eines Raumflugkörpers, die insbesondere (selbst) ein Satellit sein kann. Das einzufangende Objekt wird damit also an den Raumflugkörper angekoppelt, der damit beispielsweise in der Lage ist, je nach Objekttyp Reparaturen und/oder Wartungsoperationen wie insbesondere ein Nachtanken und/oder einen Nutzlastaustausch an einem Satelliten durchzuführen oder auch das eingefangene Objekt abzutransportieren, beispielsweise in einen jeweils vorteilhafteren Orbit.

Notwendig ist für das automatische Einfangen eine präzise Bestimmung einer jeweils aktuellen relativen Position des Objektes in Bezug auf ein Element der einfangenden Vorrichtung, insbesondere die Bestimmung eines Abstandes einer Greifeinrichtung der Vorrichtung vom Objekt.

Dazu werden herkömmlicherweise z.B. Lichtstreifensensoren eingesetzt, die einen jeweiligen Abstand durch Bestimmung eines Versatzes der Projektion einer Laserlinie auf das Objekt mit einem Kamerabild ermitteln. Die Auswertung erfordert dabei jedoch einen erheblichen Bildverarbeitungsaufwand, zudem wird für die Projektion der Laserlinie ein raumfahrtqualifizierter Laser benötigt, der für den erforderlichen Wellenlängebereich nur eingeschränkt verfügbar ist.

Eine weitere Möglichkeit zur Bestimmung eines Abstandes ist durch Infrarotsensoren gegeben, die ebenfalls eine Entfernungsmessung durch Triangulation durchführen. Dabei besteht jedoch eine hohe Abhängigkeit von der jeweiligen Sonnenillumination, zudem erfordert die punktförmige Messung eine genaue Ausrichtung des Lichtstrahls auf einen jeweiligen Messpunkt, was oft schwer zu realisieren ist

Im weiteren Stand der Technik offenbart US 2003/169035 A1 ein Verfahren zum Bestimmen eines Oberflächenprofils eines elektrisch leitenden Objekts mit Hilfe einer Sonde mit einem Sender, der derart eingerichtet ist, daß er transiente Wirbelströme in dem Objekt induziert. US 5 003 260 A und US 2018/292235 A1 offenbaren Wirbelstromsensoren zur Positionsmessungen.

Der vorliegenden Erfindung liegt die Aufgabe zugrunde, eine Technik bereitzustellen, mit der auf einfache und von jeweiligen Lichtverhältnissen unabhängige Weise eine jeweilige relative

Position eines Objekts zu einer vorgegebenen Einrichtung bestimmt werden kann. Der Erfindung liegt weiterhin die Aufgabe zugrunde, eine Technik zum Einfangen von Objekten im Weltraum zu verbessern.

Die Aufgaben werden gelöst durch eine Sensoreinrichtung gemäß Anspruch 1, eine Einfangvorrichtung nach Anspruch 2, ein Bestimmungsverfahren nach Anspruch 5 und ein Einfangverfahren gemäß Anspruch 8. Vorteilhafte Ausführungsformen sind in den Unteransprüchen, der Beschreibung und den Figuren offenbart.

Eine erfindungsgemäße Sensoreinrichtung dient der Bestimmung einer (jeweils aktuellen) relativen Position eines Objekts im Weltraum in Bezug auf die Sensoreinrichtung. Das Objekt kann beispielsweise Weltraumschrott oder ein funktionsfähiger Satellit sein. Die Bestimmung kann insbesondere die Bestimmung eines (jeweils aktuellen) Abstandes des Objekts bzw. eines zum Objekt gehörigen Elementes (insbesondere eines zu einem Satelliten gehörigen Launch-Adapter-Rings) von der Sensoreinrichtung und/oder von einem mit der Sensoreinrichtung verbundenen Element wie insbesondere einer Greifeinrichtung zum Ergreifen des Objekts umfassen.

Die Sensoreinrichtung umfasst eine Mehrzahl von mindestens drei in einer Reihe angeordneten(vorzugsweise gleichartigen) Wirbelstromsensoren, wobei sich Erfassungsbereiche in der Reihe benachbarter Wirbelstromsensoren überlappen (d.h. überschneiden); als "Erfassungsbereich" eines Wirbelstromsensors wird dabei in dieser Schrift der Raum bezeichnet, in dem der Wirbelstromsensor ein Objekt detektieren kann.

Weiterhin umfasst eine erfindungsgemäße Sensoreinrichtung eine Auswertungseinheit, die aus vom Objekt hervorgerufenen, von den einzelnen Wirbelstromsensoren jeweils erfassten Signalen die relative Position entlang der Reihe bestimmt.

Vorzugsweise sind die Wirbelstromsensoren parallel zueinander angeordnet, beispielsweise jeweils einer gemeinsamen Ebene zugewandt. Insbesondere können die Wirbelstromsensoren vorzugsweise so angeordnet sein, dass ihre jeweiligen Erfassungsbereiche entlang einer gemeinsamen Ebene verschoben zueinander sind.

Die Auswertungseinheit ist dazu eingerichtet, Signale, die (beispielsweise gleichzeitig) von verschiedenen der Wirbelstromsensoren erfasst wurden, miteinander zu vergleichen und die relative Position unter Berücksichtigung mindestens eines so erhaltenen Vergleichsergebnisses zu bestimmen. Die Betrachtung des Vergleichsergebnisses, beispielsweise eines Verhältnisses der Signale zueinander und vorzugsweise unter Berücksichtigung eines jeweiligen Musters, in dem die Wirbelstromsensoren zueinander angeordnet sind, ermöglicht eine besonders präzise Bestimmung der relativen Position des Objektes, weil damit Mängel in der Messempfindlichkeit der einzelnen Wirbelstromsensoren kompensiert werden können.

Ein erfindungsgemäßes Bestimmungsverfahren dient dem Bestimmen einer (jeweils aktuellen) relativen Position eines Objekts, wobei eine erfindungsgemäße Sensoreinrichtung nach einer der in dieser Schrift offenbarten Ausführungsformen als Bezugssystem dient und für das Bestimmen verwendet wird. Zwei Wirbelstromsensoren der Sensoreinrichtung mit einander überlappenden jeweiligen Erfassungsbereichen erfassen dabei je mindestens ein vom Objekt hervorgerufenes Signal. Die Signale werden ausgewertet und damit die relative Position des Objekts in Bezug auf die Sensoreinrichtung bestimmt. Das Objekt kann (wiederum) beispielsweise Weltraumschrott oder ein funktionsfähiger ein Satellit sein. Das Bestimmen der relativen Position kann insbesondere ein Bestimmen eines Abstandes des Objekts bzw. eines zum Objekt gehörigen Elementes (insbesondere eines zu einem Satelliten gehörigen Launch-Adapter-Rings) von der Sensoreinrichtung und/oder von einer mit dieser verbundenen Einrichtung umfassen.

Ein erfindungsgemäßes Bestimmungsverfahren kann ein vor dem Erfassen erfolgendes Heranführen der Sensoreinrichtung an das Objekt umfassen, beispielsweise so weit, dass das Objekt in den Erfassungsbereich mindestens eines der Wirbelstromsensoren eintritt. Im Fall, dass das Objekt ein Satellit mit einem Launch-Adapter-Ring ist, kann das Bestimmungsverfahren ein Heranführen der Sensoreinrichtung an eine Grundfläche (d.h. an eine ebene, einer Außenumgebung zugewandte Oberfläche) des Launch-Adapter-Rings derart umfassen, dass die Grundfläche im Erfassungsbereich mindestens eines der Wirbelstromsensoren ist und dieser Wirbelstromsensor der Grundfläche zugewandt ist.

Der Einsatz von Wirbelstromsensoren bei einer erfindungsgemäßen Sensoreinrichtung bzw. einem erfindungsgemäßen Bestimmungsverfahren erlaubt eine Positionsbestimmung, insbesondere eine Abstandbestimmung unabhängig von jeweiligen Lichtverhältnissen und mit geringem Datenverarbeitungsaufwand. Darüber hinaus ermöglicht er einen Aufbau der Sensoreinrichtung unter Vermeidung hochintegrierter digitaler Elektronik. Insbesondere ist eine erfindungsgemäße Sensoreinrichtung damit robust gegenüber Umgebungseinflüssen im geostationären Orbit und für verschiedene Redundanzniveaus erweiterbar, und ein erfindungsgemäßes Bestimmungsverfahren ist entsprechend anwendbar. Die Überlappung der Erfassungsbereiche der Wirbelstromsensoren erlaubt eine präzise Bestimmung der relativen Position trotz bzw. unter Berücksichtigung jeweils auftretender Streuungen in der Messempfindlichkeit der einzelnen Wirbelstromsensoren.

Es versteht sich, dass die relative Position des Objekts in Bezug auf die Sensoreinrichtung durch Bewegung eines der beiden Elemente geändert wird. Die jeweils bestimmte relative Position ist also jeweils eine aktuelle und kann nach einer derartigen Bewegung neu bestimmt werden.

Ein erfindungsgemäßes Bestimmungsverfahren kann jeweils auf einen Aufruf hin (situationsbedingt) durchgeführt und/oder jeweils in vorgegebenen Zeitabständen wiederholt werden. Gemäß vorteilhaften Ausführungsformen wird ein erfindungsgemäßes Bestimmungsverfahren mindestens zeitweise kontinuierlich durchgeführt, insbesondere während einer Bewegung von Objekt und Sensoreinrichtung relativ zueinander, so dass dann eine jeweils bestimmte relative Position kontinuierlich aktualisiert wird.

Insbesondere kann ein erfindungsgemäßes Bestimmungsverfahren zusätzlich ein Bewegen der Sensoreinrichtung relativ zum einzufangenden Objekt in eine optimierte Lage umfassen, wobei die optimierte Lage dadurch gegeben sein kann, dass mindestens zwei Wirbelstromsensoren der Sensoreinrichtung (vorzugsweise gleichzeitig) jeweilige Signale erfassen, die ein vorgegebenes Verhältnis zueinander haben, beispielsweise gleich sind. Das Bestimmen der relativen Position kann dann in der optimierten Lage der Sensoreinrichtung erfolgen. Damit kann vorteilhaft gewährleistet werden, dass die Bestimmung der relativen Position in einer Konstellation von Sensoreinrichtung und Objekt zueinander erfolgt, in der die jeweilige Messgenauigkeit der einzelnen Wirbelstromsensoren bekannt ist.

Gemäß bevorzugten Ausführungsformen der vorliegenden Erfindung umfasst die Sensoreinrichtung mindestens drei oder sogar mindestens vier (gemäß einem speziellen Ausführungsbeispiel genau vier) Wirbelstromeinrichtungen, die in einer (geraden) Reihe angeordnet sind (die hier auch als Wirbelstromsensorenreihe bezeichnet wird). Vorzugsweise überlappen sich dabei die Erfassungsbereiche jeweils in der Reihe benachbarter Wirbelstromsensoren. Vorzugsweise sind die Wirbelstromsensoren in der Reihe gleichmäßig beabstandet, so dass also jeweils in der Reihe benachbarte Wirbelstromsensoren alle denselben Abstand voneinander haben.

Eine derartige Anordnung ermöglicht ein besonders einfaches Abtasten des jeweiligen Objekts mit der Sensoreinrichtung, indem diese relativ zum Objekt bewegt wird. So kann insbesondere auf einfache Weise eine optimierte Lage von Objekt und Sensoreinrichtung relativ zueinander wie oben beschrieben eingerichtet werden.

Gemäß einer vorteilhaften Ausführungsform eines erfindungsgemäßen Bestimmungsverfahrens wird eine derart ausgebildete Sensoreinrichtung verwendet, deren Auswertungseinheit zudem - wie oben erwähnt - dazu eingerichtet ist, von den verschiedenen Wirbelstromsensoren jeweils erfasste Signale miteinander zu vergleichen. Vorzugsweise wird dabei die Sensoreinrichtung relativ zum Objekt so bewegt, dass zwei Wirbelstromsensoren einer Reihe, zwischen denen (in der Reihe) ein weiterer (vorzugsweise genau ein weiterer) Wirbelstromsensor angeordnet ist, jeweils Signale erfassen, die ein vorgegebenes Verhältnis zueinander haben, beispielsweise gleich sind: Die beiden Wirbelstromsensoren bestimmen dann also insbesondere eine optimierte Lage wie oben definiert. Auf diese Weise kann eine relative Lage des Objekts zum weiteren Wirbelstromsensor und damit zu dessen Erfassungsbereich eingeschätzt werden, woraus sich die (aktuelle) Präzision eines (oder mehrerer) vom weiteren Wirbelstrom erfassten Signals ergibt. Ein derartiges Signal wird dann vorzugsweise zur Bestimmung der relativen Position herangezogen.

Beispielsweise kann bei regelmäßig in der Reihe angeordneten, gleichartigen Wirbelstromsensoren und einer optimierten Lage, in der die zum weiteren Wirbelstromsensor benachbarten Wirbelstromsensoren gleiche Signale erfassen, geschlossen werden, dass sich das Objekt in einem Bereich befindet, in dem der weitere Wirbelstromsensor höchste Messempfindlichkeit und damit -genauigkeit aufweist. Die relative Position kann dann aus einem oder mehreren Signalen bestimmt werden, die der weitere Wirbelstromsensor erfasst, während Sensoreinrichtung und Objekt in der optimierten Lage zueinander sind.

Eine erfindungsgemäße Einfangvorrichtung dient dem (vorzugsweise robotischen) Einfangen von Objekten (beispielsweise Weltraumschrott und/oder Satelliten) im Weltraum. Die Einfangvorrichtung umfasst eine Greifeinrichtung zum Ergreifen des einzufangenden Objekts (beispielsweise an einem Element des Objekts; im Falle, dass das Objekt ein Satellit ist, kann das Element beispielsweise dessen Launch-Adapter-Ring sein, an dem anzugreifen die Greifeinrichtung dann also eingerichtet sein kann).

Darüber hinaus umfasst die Einfangvorrichtung eine Führungseinrichtung (beispielsweise einen Roboterarm), mit der die Greifeinrichtung bewegt, insbesondere dem Objekt angenähert werden kann, sowie eine erfindungsgemäße Sensoreinrichtung gemäß einer der in dieser Schrift offenbarten Ausführungsformen. Vorzugsweise weist die Führungseinrichtung mindestens oder genau zwei Freiheitsgrade bezüglich ihrer Bewegbarkeit auf.

Ein erfindungsgemäßes Einfangverfahren dient entsprechend dem (vorzugsweise robotischen) Einfangen eines Objekts im Weltraum. Dabei wird eine erfindungsgemäße Einfangvorrichtung gemäß einer der in dieser Schrift offenbarten Ausführungsformen eingesetzt. Das Verfahren umfasst das Bestimmen einer relativen Position des jeweils einzufangenden Objekts im Weltraum in Bezug auf eine Sensoreinrichtung der Einfangvorrichtung, wobei das Bestimmen im Wege einer Ausführungsform eines erfindungsgemäßen Bestimmungsverfahrens erfolgt. Weiterhin umfasst das Einfangverfahren das Ergreifen des einzufangenden Objektes (z.B. an einem Element des Objekts) mit einer Greifeinrichtung der Einfangvorrichtung. Das Objekt kann beispielsweise ein (insbesondere funktionsfähiger) Satellit oder Weltraumschrott sein.

Vorzugsweise umfasst eine erfindungsgemäße Einfangvorrichtung eine Steuerung, die dazu eingerichtet ist, eine durch die Führungseinrichtung ausgeführte Bewegung der Greifeinrichtung und/oder einen durch die Greifeinrichtung ausgeführten Greifvorgang auf Grundlage mindestens einer durch die Sensoreinrichtung bestimmten relativen Position des jeweiligen Objekts zur Sensoreinrichtung zu regeln. Die mindestens eine relative Position kann dabei insbesondere einen Abstand des Objektes von der Sensoreinrichtung umfassen und/oder in eine relative Position (insbesondere einen Abstand) des Objekts zur (bzw. von der) Greifeinrichtung umgerechnet werden, z.B. unter Berücksichtigung von Daten zur jeweiligen relativen Position von Greifeinrichtung und Sensoreinrichtung zueinander.

Insbesondere vorteilhaft ist eine Variante eines erfindungsgemäßen Einfangverfahrens, bei der die Sensoreinrichtung wie oben beschrieben relativ zum Objekt in eine optimierte Lage bewegt und die relative Position in dieser optimierten Lage bestimmt wird. Das Einfangverfahren umfasst dann vorzugsweise weiterhin ein Annähern der Greifeinrichtung an das Objekt unter Beibehaltung des vorgegebenen Verhältnisses der von den mindestens zwei Wirbelstromsensoren erfassten Signale. Sensoreinrichtung und Objekt bleiben bei diesem Annähern also in einer optimierten Lage zueinander, während sich ihr Abstand voneinander verringert. Auf diese Weise kann die einmal ermittelte bzw. eingestellte optimierte Lage, in der die Sensoreinrichtung besonders präzise ist, für den Greifvorgang genutzt werden.

Gemäß bevorzugten Ausführungsformen einer erfindungsgemäßen Einfangvorrichtung ist die Sensoreinrichtung in ein Halteelement der Greifeinrichtung integriert, wobei das Halteelement eine Anliegefläche aufweist, die dazu eingerichtet ist, beim Einfangen (vorzugsweise mit flächigem Kontakt) an eine Oberfläche eines jeweils einzufangenden Objekts angelegt zu werden. Die Anliegefläche ist vorzugsweise eben ausgebildet. Im Fall, dass das einzufangende Objekt ein Satellit ist, kann die genannte Oberfläche beispielsweise ein Bereich einer ebenen Grundfläche eines Launch-Adapter-Rings des Satelliten sein. Zum Halten des Objektes kann die Greifeinrichtung bei derartigen Ausführungsformen vorzugsweise einen Klemmfinger umfassen, der dazu eingerichtet ist, das Element gegen die Anliegefläche zu pressen; ein erfindungsgemäßes Einfangverfahren kann dann ein solches Pressen umfassen.

Ein erfindungsgemäßes Einfangverfahren, bei dem eine Einfangvorrichtung, deren Greifeinrichtung eine Anliegefläche aufweist, eingesetzt wird, kann ein Annähern der Anliegefläche und einer Oberfläche des einzufangenden Objektes aneinander sowie ein Halten der Oberfläche in (beispielsweise flächigem) Kontakt zur Anliegefläche umfassen.

Derartige Ausführungsformen ermöglichen ein besonders behutsames Einfangen, in denen unbeabsichtigte Impulsübertragungen auf das einzufangende Objekt, die in der Schwerelosigkeit gravierende Auswirkungen haben, minimiert oder sogar vermieden werden können.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine exemplarische erfindungsgemäße Sensoreinrichtung und ein Objekt in einander überlappenden Erfassungsbereichen der Wirbelstromsensoren;
- Figur 2:: eine erfindungsgemäße Einfangvorrichtung gemäß einem Ausführungsbeispiel; und
- Figuren 3a, 3b, 3c:: ein Objekt in verschiedenen relativen Positionen (und damit in Bereichen unterschiedlicher Messgenauigkeiten von Wirbelstromsensoren) in Bezug auf eine exemplarische erfindungsgemäße Sensoreinrichtung, entsprechend jeweiligen Phasen eines exemplarischen Bestimmungsverfahrens.

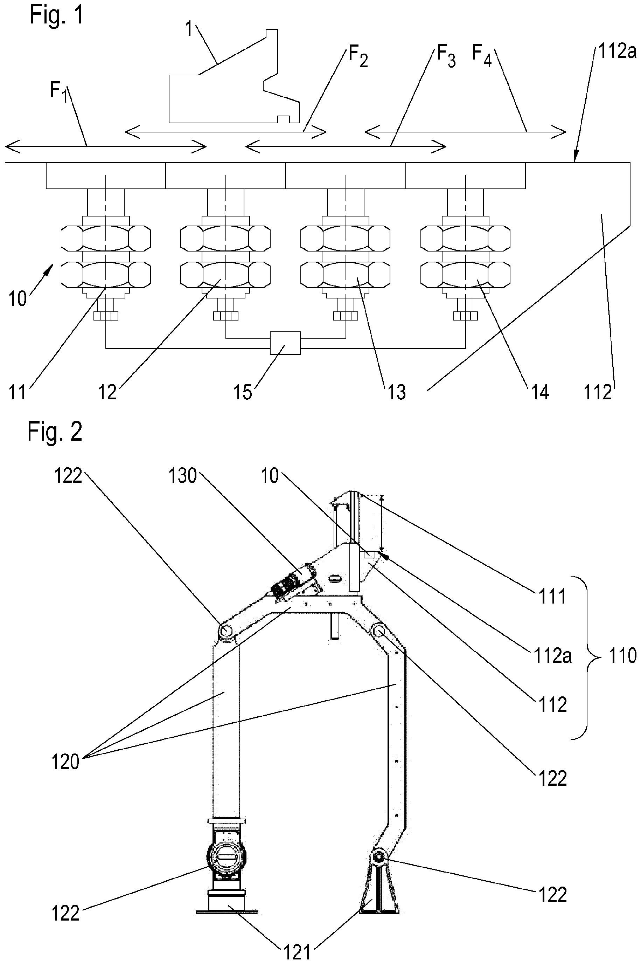

In Figur 1 ist eine Sensoreinrichtung 10 gemäß einem Ausführungsbeispiel der vorliegenden Erfindung zusammen mit einem exemplarischen Objekt 1 dargestellt, dessen relative Position in Bezug auf die Sensoreinrichtung mittels selbiger bestimmt werden kann.

Die Sensoreinrichtung 10 ist dabei vorliegend in ein Halteelement 112 einer Greifeinrichtung einer erfindungsgemäßen Einfangvorrichtung integriert, die in der Figur 2 dargestellt ist und weiter unten beschrieben wird.

Im in der Figur 1 gezeigten Beispiel umfasst die Sensoreinrichtung 10 vier gleichartige Wirbelstromsensoren 11, 12, 13, 14, die vorliegend in regelmäßigen Abständen in einer Wirbelstromsensorenreihe angeordnet und alle in gleicher Weise einer Anliegefläche 112a des Halteelements 112 zugewandt sind, die dazu eingerichtet ist, beim Einfangen eines Objektes (vorzugsweise mit flächigem Kontakt) an eine Oberfläche des Objekts angelegt zu werden.

Jeder der Wirbelstromsensoren 11, 12, 13, 14 ist mit einer schematisch dargestellten Auswertungseinheit 15 der Sensoreinrichtung 10 verbunden, die dazu eingerichtet ist, aus den von den einzelnen Wirbelstromsensoren jeweils erfassten Signalen eine jeweils aktuelle relative Position des Objekts 1 in Bezug auf die Sensoreinrichtung 10 (und damit vorzugsweise in Bezug auf die Anliegefläche 112a) zu bestimmen.

Die Wirbelstromsensoren weisen jeweils einen Erfassungsbereich auf. Dessen jeweilige Erstreckung F₁, F₂, F₃, F₄ in Richtung der Reihe, in der die Wirbelstromsensoren angeordnet sind, und parallel zur Anliegefläche 112a ist in der Figur 1 durch entsprechende Doppelpfeile gekennzeichnet. Wie in der Figur 1 zu erkennen ist, überlappen (d.h. überschneiden) sich die Erfassungsbereiche von je zwei in der Reihe benachbarten Wirbelstromsensoren.

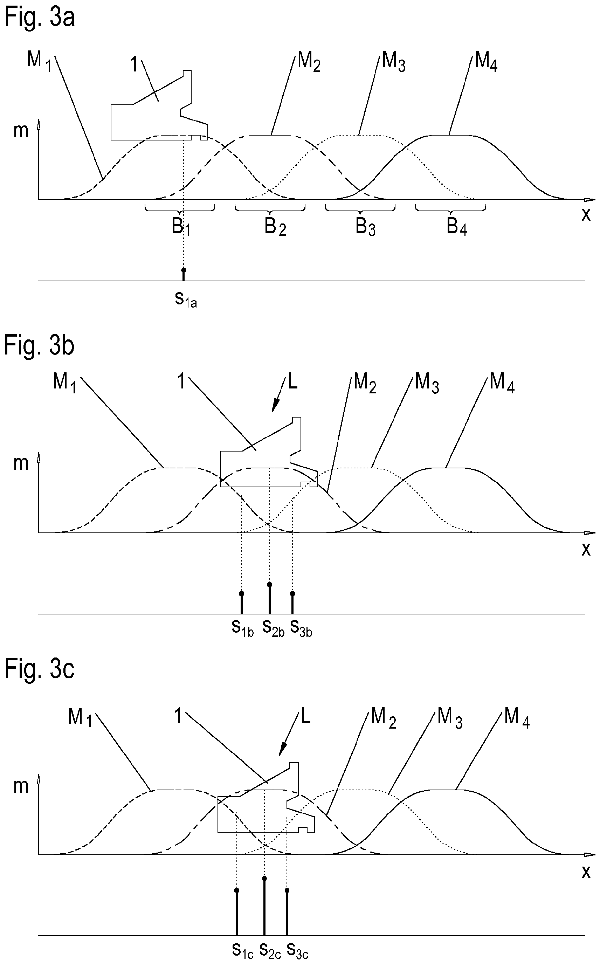

Im in der Figur 1 (und ebenfalls in den Figuren 3a - 3c) gezeigten, bevorzugten Ausführungsbeispiel ist das Objekt 1 ein einzufangender Satellit, von dem in den Figuren nur dessen Launch-Adapter-Ring in einer Schnittdarstellung gezeigt ist. Eine Grundfläche, also eine ebene, nach außen weisende Oberfläche des Launch-Adapter-Ringes ist vorliegend der Sensoreinrichtung zugewandt und parallel zur Anliegefläche 112a angeordnet.

In der dargestellten Situation befindet sich das Objekt 1 zudem zumindest teilweise innerhalb jedes der Erfassungsbereiche der Wirbelstromsensoren 11, 12 und 13, die somit alle jeweilige Signale erfassen. Aufgrund der symmetrischen Lage sind die von den Wirbelstromsensoren 11 und 13 erfassten Signale dabei vorzugsweise gleich, so dass aus einem Vergleich der jeweiligen Signale, den die Auswertungseinheit 15 vorzugsweise vornimmt, automatisch geschlossen werden kann, dass sich das Objekt in einem zentralen Bereich des Erfassungsbereichs des Wirbelstromsensors 12 befindet. So kann erkannt werden, dass die vom Wirbelstromsensor 12 erfassten Signale in dieser Situation besonders genau sind. Bei der Bestimmung der relativen Position des Objekts 1 werden diese Signale dann vorzugsweise entsprechend berücksichtigt.

Figur 2 zeigt schematisch eine erfindungsgemäße Einfangvorrichtung 100, mit der Objekte im Weltraum eingefangen (also insbesondere ergriffen und gehalten) werden können. Die Einfangvorrichtung umfasst eine Führungseinrichtung 120, die mit ihren Füßen 121 an einem geeigneten Raumflugkörper befestigt sein oder werden kann (nicht dargestellt), und eine Greifeinrichtung 110, die dann mittels der Führungseinrichtung 120 (aufgrund darin enthaltener Gelenke 122) relativ zum Raumflugkörper bewegbar ist. Auf diese Weise kann die Greifeinrichtung ein jeweils einzufangendes Objekt angenähert werden, ehe sie dieses ergreift.

Die Greifeinrichtung 110 umfasst ein Halteelement 112 und einen Klemmfinger 111. Wie durch einen Pfeil gekennzeichnet, ist der Klemmfinger relativ zum Halteelement 112 beweglich. So kann der Klemmfinger ein jeweils einzufangendes bzw. eingefangenes Objekt zur Anliegefläche 112a des Halteelements 112 hinführen und/oder es an sie pressen, so dass das Objekt ergriffen bzw. festgehalten werden kann. Dabei umgreift der Klemmfinger vorzugsweise ein am Objekt hervorstehendes Element oder greift in eine Nut im Objekt ein.

In das Halteelement 112 ist im gezeigten Beispiel eine erfindungsgemäße Sensoreinrichtung 10 integriert, wie genauer in der Figur 1 gezeigt und oben beschrieben ist. Damit kann eine relative Position des jeweils einzufangenden Objektes zur Sensoreinrichtung und damit zur Greifeinrichtung 110 bzw. zur Anliegefläche 112a bestimmt werden. Mittels einer (nicht dargestellten) Steuerung der Einfangvorrichtung 100 kann auf Grundlage der so bestimmten jeweils aktuellen relativen Position die Greifeinrichtung und das Objekt in besonders vorteilhafter Weise aneinander herangeführt, also angenähert werden. Insbesondere können so unbeabsichtigte Impulsübertragungen auf das einzufangende Objekt, die in der Schwerelosigkeit gravierende Auswirkungen haben, minimiert oder sogar vermieden werden.

Im vorliegenden Ausführungsbeispiel umfasst die Einfangvorrichtung zudem eine Kontrolleinrichtung 130, die vorzugsweise dazu eingerichtet ist, den Greifvorgang und/oder die Annäherung zu kontrollieren. Die Kontrolleinrichtung 130 kann beispielsweise eine Laservorrichtung und/oder eine Kamera umfassen. Von der Kontrolleinrichtung 130 gelieferte Daten können dann ebenfalls, insbesondere in Ergänzung der Sensoreinrichtung 10 für eine Regelung des Greifvorgangs und/oder der Annäherung berücksichtigt werden. Das Vorhandensein der Sensoreinrichtung 10 ermöglicht dabei, dass die Kontrolleinrichtung 130 lediglich zum Erzeugen von Redundanz in bestimmten Situationen betrieben wird, beispielsweise lediglich beim Beenden des Greifvorgangs oder im Falle eines Defekts. Insbesondere kann die Kontrolleinrichtung 130 diskontinuierlich einzuschalten sein bzw. eingeschaltet werden, so dass ein Bildverarbeitungsaufwand reduziert ist.

In den Figuren 3a - 3c sind für eine erfindungsgemäße Sensoreinrichtung mit vier in einer Reihe angeordneten Wirbelstromsensoren die jeweils zu den einzelnen Wirbelstromsensoren gehörigen Messgenauigkeiten m als Funktionsgraphen M₁, M₂, M₃ und M₄ in Abhängigkeit von einer jeweiligen Position x eines Objektes dargestellt; die Position x wird dabei entlang der Reihe, in der die Wirbelstromsensoren angeordnet sind, gemessen, d.h. in den Figuren 3a - 3c ist die x-Achse als sich entlang der Reihe erstreckend anzusehen.

Abhängig von den verschiedenen Positionen eines Objektes in x-Richtung, also entlang der Reihe der Wirbelstromsensoren, erfassen die einzelnen Wirbelstromsensoren unterschiedliche Signale, die jeweils zudem von einem Abstand des Objekts vom jeweiligen Wirbelstromsensor abhängen. Zur Erläuterung eines erfindungsgemäßen Bestimmungsverfahrens (s.u.) sind einige dieser Signale in den Figuren 3a - 3c jeweils unten dargestellt.

Wie den Figuren 3a - 3c zu entnehmen ist, weisen die einzelnen Wirbelstromsensoren in einem jeweils zugehörigen zentralen Zuverlässigkeitsbereich B₁, B₂, B₃, B₄ entlang der x-Achse jeweils eine hohe Messgenauigkeit m auf, wohingegen die Messgenauigkeit in angrenzenden Bereichen (innerhalb eines jeweiligen Erfassungsbereichs) abfällt.

In der in der Figur 3a gezeigten Situation befindet sich das Objekt zumindest teilweise im Zuverlässigkeitsbereich B₁, in dem ein (nicht dargestellter) erster Wirbelstromsensor eine hohe Messgenauigkeit aufweist. Das vom ersten Wirbelstromsensor erfasste Signal s₁ₐ hat daher eine hohe Genauigkeit, was jedoch bei Unkenntnis der relativen Position des Objektes in Bezug auf die Sensoreinrichtung nicht erkannt werden kann. Um die entsprechende Zuverlässigkeit eines erfassten Signals auch einschätzen zu können, wird die Sensoreinheit gemäß einem vorteilhaften erfindungsgemäßen Bestimmungsverfahren daher relativ zum Objekt bewegt (vorzugsweise parallel zu einer der Sensoreinheit zugewandten Oberfläche des Objekts), und zwar so, dass zwei Wirbelstromsensoren der Reihe, zwischen denen ein weiterer Wirbelstromsensor angeordnet ist, Signale liefern, die ein vorgegebenes Verhältnis zueinander haben, beispielsweise gleich sind: Wie oben erwähnt wird eine Lage des Objekts, in der diese Bedingung erfüllt ist, in dieser Schrift als eine optimierte Lage bezeichnet.

In Figur 3b ist das Objekt 1 in einer solchen optimierten Lage L angeordnet: Die von dem (jeweils nicht dargestellten) ersten und dritten Wirbelstromsensor in der Reihe gelieferten Signale s_{1b} und s_{3b} sind dabei vorliegend gleich. Aus der bekannten Anordnung der Wirbelstromsensoren in der Reihe ergibt sich daraus im vorliegenden Beispiel, dass sich das Objekt im Zuverlässigkeitsbereich B₂ des zwischen dem ersten und dem dritten Wirbelstromsensor angeordneten zweiten Wirbelstromsensors befindet. Ein von diesem zweiten Wirbelstromsensor erfasstes Signal s_{2b} weist daher eine hohe Genauigkeit auf und kann daher zur Bestimmung der relativen Position des Objekts, insbesondere des Abstandes des Objektes von der Sensoreinrichtung vorzugsweise entsprechend berücksichtigt werden.

In Figur 3c ist dargestellt, wie das Objekt 1 gemäß einem erfindungsgemäßen Einfangverfahren insbesondere nach dem (mit Bezug zu den Figuren 3a und 3b erläuterten) Bestimmen einer (ersten) relativen Position an die Sensoreinrichtung angenähert wird: Die Annäherung ist dabei so geregelt, dass die jeweils vom ersten und vom dritten Wirbelstromsensor erfassten Signale s_{1c}, s_{3c} weiterhin ein bzw. das vorgegebene(s) Verhältnis zueinander haben, vorliegend gleich sind, so dass also das Objekt in der optimierten Lage L bleibt, dabei aber an die Sensoreinrichtung herangeführt wird, beispielsweise bis ein vom zweiten Wirbelstromsensor erfasstes Signal s_{2c} einen vorgegebenen Signalwert hat, bei dem dann eine Greifeinrichtung das Objekt erfassen, insbesondere ein Klemmfinger das Objekt gegen eine entsprechende Anliegefläche pressen kann.

Offenbart ist Sensoreinrichtung 10 zur Bestimmung einer relativen Position eines Objekts 1 im Weltraum in Bezug auf die Sensoreinrichtung. Die Sensoreinrichtung umfasst eine Mehrzahl an Wirbelstromsensoren 11, 12, 13, 14, deren Erfassungsbereiche sich mindestens teilweise überlappen. Weiterhin umfasst die Sensoreinrichtung eine Auswertungseinheit 15, die dazu eingerichtet ist, aus von den einzelnen Wirbelstromsensoren jeweils erfassten Signalen s₁ₐ, s_{1b}, s_{1c}, s_{2b}, s_{2c}, s_{3b}, s_{3c} die relative Position zu bestimmen.

Offenbart ist ferner eine Einfangvorrichtung 100 mit einer Greifeinrichtung 110, einer Führungseinrichtung 120 für die Greifeinrichtung und einer Sensoreinrichtung 10.

Weiterhin offenbart sind ein Bestimmungsverfahren zum Bestimmen einer relativen Position eines Objekts 1 im Weltraum in Bezug auf eine Sensoreinrichtung 10, und ein Einfangverfahren zum Einfangen eines Objekts im Weltraum.

### Bezugszeichen

- 1: Objekt
- 10: Sensoreinrichtung
- 11, 12, 13, 14: Wirbelstromsensor
- 15: Auswertungseinheit
- 100: Einfangvorrichtung
- 110: Greifeinrichtung
- 111: Klemmfinger
- 112: Halteelement
- 112a: Anliegefläche
- 120: Führungseinrichtung
- 121: Füße der Führungseinrichtung
- 122: Gelenke
- 130: Kontrolleinrichtung
- B₁, B₂, B₃, B₄: Zuverlässigkeitsbereich eines jeweiligen Wirbelstromsensors
- F₁, F₂, F₃, F₄: Erstreckung eines jeweiligen Erfassungsbereichs eines jeweiligen Wirbelstromsensorsparallel zur Anliegefläche 112 in Richtung einer Wirbelstromsensorenreihe
- s₁ₐ, s_{1b}, s_{1c}, s_{2b}, s_{2c}, s_{3b}, s_{3c} M₁, M₂, M₃, M₄: Signal Messgenauigkeits-Funktionsgraph eines jeweiligen Wirbelstromsensors

## Patentansprüche

1. Sensoreinrichtung (10) zur Bestimmung einer relativen Position eines Objekts (1) im Weltraum in Bezug auf die Sensoreinrichtung, wobei die Sensoreinrichtung umfasst:
- mindestens drei Wirbelstromsensoren (11, 12, 13, 14), die in einer Reihe angeordnet sind, wobei sich Erfassungsbereiche jeweils in der Reihe benachbarter Wirbelstromsensoren (11, 12, 13, 14) überlappen; und
- eine Auswertungseinheit (15), die dazu eingerichtet ist, aus vom Objekt hervorgerufenen, von den einzelnen Wirbelstromsensoren jeweils erfassten Signalen (s₁ₐ, s_{1b}, s_{1c,} s_{2b}, s_{2c}, s_{3b}, s_{3c}) die relative Position entlang der Reihe zu bestimmen, wobei die Auswertungseinheit (15) dazu eingerichtet ist, von verschiedenen der Wirbelstromsensoren (11, 12, 13, 14) jeweils erfasste Signale (s₁ₐ, s_{1b}, s_{1c} s_{2b}, s_{2c}, s_{3b}, s_{3c}) miteinander zu vergleichen und die relative Position unter Berücksichtigung mindestens eines so erhaltenen Vergleichsergebnisses zu bestimmen.

2. Einfangvorrichtung (100) zum Einfangen von Objekten im Weltraum, die eine Greifeinrichtung (110) zum Ergreifen eines am jeweils einzufangenden Objekt angeordneten Elements, eine Führungseinrichtung (120) zum Bewegen der Greifeinrichtung und eine Sensoreinrichtung (10) gemäß Anspruch 1 umfasst.

3. Einfangvorrichtung gemäß Anspruch 2, wobei die Führungseinrichtung (120) eine Steuerung umfasst, die dazu eingerichtet ist, eine durch die Führungseinrichtung ausgeführte Bewegung der Greifeinrichtung (110) und/oder einen durch die Greifeinrichtung (110) ausgeführten Greifvorgang auf Grundlage mindestens einer durch die Sensoreinrichtung (10) bestimmten relativen Position des Objekts zu regeln.

4. Einfangvorrichtung gemäß einem der Ansprüche 2 oder 3, wobei die Sensoreinrichtung (10) in ein Halteelement (112) der Greifeinrichtung (110) integriert ist, wobei das Halteelement (112) eine Anliegefläche (112a) aufweist, die dazu eingerichtet ist, beim Einfangen an eine Oberfläche eines jeweils einzufangenden Objekts (1) angelegt zu werden.

5. Bestimmungsverfahren zum Bestimmen einer relativen Position eines Objekts (1) im Weltraum in Bezug auf eine Sensoreinrichtung (10) nach Anspruch 1 mittels der Sensoreinrichtung, wobei das Bestimmungsverfahren umfasst:
- Erfassen zumindest je eines vom Objekt (1) hervorgerufenen Signals (s₁ₐ, s_{1b}, s_{1c} s_{2b}, s_{2c}, s_{3b}, s_{3c}) durch mindestens zwei Wirbelstromsensoren (11, 12, 13, 14) der Sensoreinrichtung, die einander überlappende Erfassungsbereiche aufweisen;
- Bestimmen der relativen Position durch Auswerten der erfassten Signale.

6. Bestimmungsverfahren gemäß Anspruch 5,
wobei ferner das Bestimmungsverfahren ein Bewegen der Sensoreinrichtung (10) relativ zum Objekt (1) in eine optimierte Lage (L) umfasst, in der von mindestens zwei Wirbelstromsensoren der Sensoreinrichtung erfasste Signale (s_{1b}, s_{3b}, s_{1c} s_{3c}) ein vorgegebenes Verhältnis zueinander haben, und wobei das Bestimmen der relativen Position in der optimierten Lage (L) der Sensoreinrichtung erfolgt.

7. Bestimmungsverfahren gemäß Anspruch 6, wobei die Wirbelstromsensoren, die in der optimierten Lage (L) der Sensoreinrichtung Signale in einem vorgegebenen Verhältnis zueinander erfassen, in einer Reihe mit einem dazwischen angeordneten, weiteren Wirbelstromsensor angeordnet sind und wobei zum Bestimmen der relativen Position mindestens ein Signal (s_{2b}, s_{2c}) berücksichtigt wird, das der weitere Wirbelstromsensor in der optimierten Lage Sensoreinrichtung erfasst.

8. Einfangverfahren zum Einfangen eines Objekts im Weltraum mittels einer Einfangvorrichtung (100) nach einem der Ansprüche 2 bis 4, wobei das Einfangverfahren umfasst:
- ein gemäß einem Bestimmungsverfahren nach einem der Ansprüche 5 bis 7 erfolgendes Bestimmen einer relativen Position des einzufangenden Objekts (1) im Weltraum in Bezug auf eine Sensoreinrichtung (10) der Einfangvorrichtung (100) sowie
- ein Ergreifen des einzufangenden Objektes (1) mit einer Greifeinrichtung (110) der Einfangvorrichtung (100).

9. Einfangverfahren gemäß Anspruch 8, wobei das Bestimmen der relativen Position gemäß einem Bestimmungsverfahren nach einem der Ansprüche 6 oder 7 erfolgt und wobei die Greifeinrichtung (110) zum Ergreifen des Objekts (1) unter Erhalt des vorgegebenen Verhältnisses der von den mindestens zwei Wirbelstromsensoren erfassten Signale an das Objekt angenähert wird.

10. Einfangverfahren gemäß einem der Ansprüche 8 oder 9, bei dem die Einfangvorrichtung (100) gemäß Anspruch 4 ausgebildet ist, wobei das Einfangverfahren ein Annähern der Anliegefläche (112a) und des einzufangenden Objektes (1) aneinander und ein Halten des Objekts in Kontakt zur Anliegefläche umfasst.

## Claims

1. A sensor arrangement (10) for determining a relative position of an object (1) in space in relation to the sensor arrangement, wherein the sensor arrangement comprises:
- at least three eddy current sensors (11, 12, 13, 14) arranged in a row, wherein areas of coverage of respectively adjacent eddy current sensors (11, 12, 13, 14) in the row overlap; and
- an evaluation unit (15) which is adapted to determine the relative position along the row from signals (s₁ₐ, s_{1b}, s_{1c}, s_{2b}, s_{2c}, s_{3b}, s_{3c}) produced by the object and respectively detected by the individual eddy current sensors, wherein the evaluation unit (15) is adapted to compare signals (s₁ₐ, s_{1b}, s_{1c}, s_{2b}, s_{2c}, s_{3b}, s_{3c}) respectively detected by different eddy current sensors (11, 12, 13, 14) with one another and to determine the relative position while taking at least one thus obtained comparison result into account.

2. A capturing device (100) for capturing objects in space, which comprises a gripping arrangement (110) for gripping an element arranged on the respective object to be captured, a guiding arrangement (120) for moving the gripping arrangement and a sensor arrangement (10) according to claim 1.

3. The capturing device according to claim 2, wherein the guiding arrangement (120) comprises a control system, which is adapted to control a movement of the gripping arrangement (110) carried out by the guiding arrangement and/or a gripping operation carried out by the gripping arrangement (110) on the basis of at least one relative position of the object determined by the sensor arrangement (10).

4. The capturing device according to one of claims 2 or 3, wherein the sensor arrangement (10) is integrated in a holding element (112) of the gripping arrangement (110), wherein the holding element (112) has a contact surface (112a) which is adapted to be placed against a surface of a respective object (1) to be captured in the course of a capturing operation.

5. A determination method for determining a relative position of an object (1) in space in relation to a sensor arrangement (10) according to claim 1 by means of the sensor arrangement, wherein the determination method comprises:
- detecting respectively at least one signal (s₁ₐ, s_{1b}, s_{1c}, s_{2b}, s_{2c}, s_{3b}, s_{3c}) produced by the object (1) by means of at least two eddy current sensors (11, 12, 13, 14) of the sensor arrangement with overlapping areas of coverage;
- determining the relative position by means of the evaluation of the detected signals.

6. The determination method according to claim 5,
wherein the determination method further comprises a moving of the sensor arrangement (10) into an optimal position (L) relative to the object (1) in which signals (s_{1b}, s_{3b}, s_{1c}, s_{3c}) detected by at least two eddy current sensors of the sensor arrangement have a predetermined ratio to one another,
and wherein the determination of the relative position occurs in the optimized position (L) of the sensor arrangement.

7. The determination method according to claim 6, wherein the eddy current sensors, which in the optimized position (L) of the sensor arrangement detect signals in a predetermined ratio to one another, are arranged in a row with a further eddy current sensor arranged between them,
and wherein, in order to determine the relative position, at least one signal (s_{2b}, s_{2c}) is taken into account that is detected by the further eddy current sensor in the optimized position of the sensor arrangement.

8. A capturing method for capturing an object in space by means of a capturing device (100) according to one of claims 2 to 4, wherein the capturing method comprises:
- a determination of a relative position of the object (1) to be captured in space in relation to a sensor arrangement (10) of the capturing device (100), said determination occurring in accordance with a determination method according to one of claims 5 to 7, and
- a gripping of the object (1) to be captured with a gripping arrangement (110) of the capturing device (100).

9. The capturing method according to claim 8, wherein the determination of the relative position occurs in accordance with a determination method according to one of claims 6 or 7 and wherein the gripping arrangement (110), in order to grip the object (1), is drawn closer to the object while maintaining the predetermined ratio of the signals detected by the at least two eddy current sensors.

10. The capturing method according to one of claims 8 or 9, in which the capturing device (100) is configured in accordance with claim 4, wherein the capturing method comprises a drawing of the contact surface (112a) and the object (1) to be captured toward and against one another and a holding of the object in contact with the contact surface.

## Revendications

1. Système de détection (10) pour déterminer une position relative d'un objet (1) dans un espace par rapport au système de détection, sachant que le système de détection comprend :
- au moins trois capteurs à courant de Foucault (11, 12, 13, 14), qui sont disposés en alignement, sachant que les zones de saisie se chevauchent respectivement dans l'alignement des capteurs à courant de Foucault voisins (11, 12, 13, 14), et
- une unité d'évaluation (15), qui est agencée pour déterminer à partir de signaux (s₁ₐ, s_{1b}, s_{1c}, s_{2b}, s_{2c}, s_{3b}, s_{3c}) engendrés par l'objet, saisis respectivement par les capteurs à courant de Foucault individuels, la position relative le long de l'alignement, sachant que l'unité d'évaluation (15) est agencée pour comparer entre eux des signaux (s₁ₐ, s_{1b}, s_{1c}, s_{2b}, s_{2c}, s_{3b}, s_{3c}) respectivement saisis par des capteurs à courant de Foucault (11, 12, 13, 14) différents et déterminer la position relative en prenant en considération au moins un résultat de comparaison ainsi obtenu.

2. Dispositif de saisie (100) destiné à saisir des objets dans un espace, qui comprend un système de préhension (110) pour prendre un élément disposé sur l'objet respectivement à saisir, un système de guidage (120) pour déplacer le système de préhension et un système de détection (10) selon la revendication 1.

3. Dispositif de saisie selon la revendication 2, sachant que le système de guidage (120) comprend une commande, qui est agencée pour régler un mouvement du système de préhension (110) exécuté par le système de guidage et/ou une opération de préhension exécutée par le système de préhension (110) sur la base d'au moins une position relative de l'objet déterminée par le système de détection (10) .

4. Dispositif de saisie selon l'une quelconque des revendications 2 ou 3, sachant que le système de détection (10) est intégré dans un élément de maintien (112) du système de préhension (110), sachant que l'élément de maintien (112) comporte une surface de dépose (112a), qui est agencée à cet effet pour être posée lors de la saisie sur une surface d'un objet respectivement à saisir (1).

5. Procédé de détermination destiné à déterminer une position relative d'un objet (1) dans un espace par rapport à un système de détection (10) selon la revendication 1 au moyen du système de détection, sachant que le procédé de détermination comprend :
- la saisie d'au moins respectivement un signal (s₁ₐ, s_{1b}, s_{1c}, s_{2b}, s_{2c}, s_{3b}, s_{3c}) engendré par l'objet (1) par au moins deux capteurs à courant de Foucault (11, 12, 13, 14) du système de détection, qui comportent des zones de saisie se chevauchant l'une par rapport à l'autre,
- la détermination de la position relative par évaluation des signaux saisis.

6. Procédé de détermination selon la revendication 5, sachant en plus que le procédé de détermination comprend un déplacement du système de détection (10) par rapport à l'objet (1) dans une position optimisée (L) dans laquelle des signaux (s_{1b}, s_{3b}, s_{1c}, s_{3c}) saisis par au moins deux capteurs à courant de Foucault du système de détection ont un rapport prédéfini les uns par rapport aux autres
et sachant que la détermination de la position relative a lieu dans la position optimisée (L) du système de détection.

7. Procédé de détermination selon la revendication 6, sachant que les capteurs à courant de Foucault, qui saisissent dans la position optimisée (L) du système de détection des signaux dans un rapport prédéfini les uns par rapport aux autres, sont disposés en alignement avec un autre capteur à courant de Foucault disposé entre eux
et sachant que pour déterminer la position relative au moins un signal (s_{2b}, s_{2c}) est pris en considération, que l'autre capteur à courant de Foucault saisi dans la position optimisée du système de détection.

8. Procédé de saisie destiné à saisir un objet dans un espace au moyen d'un dispositif de saisie (100) selon l'une quelconque des revendications 2 à 4, sachant que le procédé de saisie comprend :
- une détermination d'une position relative de l'objet à saisir (1) dans un espace par rapport à un système de détection (10) du dispositif de saisie (100) résultante conformément à un procédé de détermination selon l'une quelconque des revendications 5 à 7 ainsi qu'
- une préhension de l'objet à saisir (1) avec un système de préhension (110) du dispositif de saisie (100).

9. Procédé de saisie selon la revendication 8, sachant que la détermination de la position relative a lieu selon un procédé de détermination selon l'une quelconque des revendications 6 ou 7 et sachant que le système de préhension (110) est approché de l'objet pour prendre l'objet (1) à l'obtention du rapport prédéfini des signaux saisis par au moins deux capteurs à courant de Foucault.

10. Procédé de saisie selon l'une quelconque des revendications 8 ou 9 pour lequel le dispositif de saisie (100) est constitué selon la revendication 4, sachant que le procédé de saisie comprend une approche l'un de l'autre de la surface de dépose (112a) et de l'objet à saisir (1) et un maintien de l'objet en contact avec la surface de dépose.
